# EUROPÄISCHE PATENTSCHRIFT

(11) **EP 4 240 704 B1**
(45) Veröffentlichungstag und Bekanntmachung des Hinweises auf die Patenterteilung: **16.07.2025**
(21) Anmeldenummer: 21766400.2
(22) Anmeldetag: 13.08.2021
(51) Int. Cl.: C04B 26/06, C04B 28/02, C04B 26/04

(54) **MAGNETISIERBARE WÄSSRIGE SPACHTELMASSE, TROCKENPRÄPARATION FÜR MAGNETISIERBARE BESCHICHTUNGSMASSEN, MAGNETISIERBARE DISPERSIONSFARBEN UND DEREN VERWENDUNGEN**
MAGNETIZABLE AQUEOUS PUTTY, DRY PREPARATION FOR MAGNETIZABLE COATING COMPOSITIONS, MAGNETIZABLE EMULSION PAINTS AND USES THEREOF
MASTIC AQUEUX MAGNÉTISABLE, PRÉPARATION SÈCHE POUR COMPOSITIONS DE REVÊTEMENT MAGNÉTISABLES, PEINTURES EN ÉMULSION MAGNÉTISABLES ET UTILISATIONS ASSOCIÉES

(43) Veröffentlichungstag der Anmeldung: 13.09.2023
(73) Patentinhaber: FLEXFY GmbH, 64380 Roßdorf (DE)
(72) Erfinder: WALTER, Christian, 64354 Reinheim (DE); SCHRÖPFER, Anja, 64380 Roßdorf (DE); FRANKE, Victor, 64285 Darmstadt (DE); WERNER, Nicole, 64372 Ober-Ramstadt (DE)
(74) Vertreter: Metten, Karl-Heinz
(86) Internationale Anmeldenummer: PCT/EP2021/072619
(87) Internationale Veröffentlichungsnummer: WO 2023/016657

(56) Entgegenhaltungen:
- WO-A1-2014/097309
- CN-A- 107 500 607
- CN-A- 110 845 892
- CN-A- 111 677 223
- DE-A1- 19 711 473
- DE-A1- 2 620 095
- DE-A1- 4 314 522
- DE-B3- 102004 028 517
- US-A1- 2006 262 639

## Beschreibung

Die vorliegende Erfindung betrifft eine magnetisierbare wässrige Spachtelmasse für die Herstellung magnetisierbarer Beschichtungen und deren Verwendung sowie eine magnetisierbare Beschichtung für ein Substrat, erhalten oder erhältlich aus der erfindungsgemäßen Spachtelmasse.

Farben- und Spachtelmassen magnetisch oder magnetisierbar auszugestalten, ist zwar bereits versucht worden. Diese Produkte führen jedoch bislang in der Palette kommerzieller Beschichtungsmassen allenfalls ein Nischendasein.

In der DE 42 34 792 A wird zum Beispiel vorgeschlagen, Boden- und Wandbeläge auf einer Unterlage magnetisch reversibel zu fixieren. Hierbei soll in dem unterlagsseitigen Materialbereich magnetisches Schüttmaterial integriert werden, während die Spachtelmasse ferromagnetische Stoffe zu enthalten hat. Eine solche ferromagnetische Spachtelmasse, die schnell bindend und nur mit Wasser anmachbar ist und eine gute Haftung zwischen Belag und Untergrund gewährleisten soll, hat gemäß der DE 197 11 473 C2 a) ferromagnetisches Eisenpulver, kohlenstoffhaltiges Eisenpulver oder Magnetit als ferromagnetisches Material, b) ein Gemisch aus Portlandzement, Tonerdeschmelzzement und einer Calciumsulfatkomponente als hydraulisches Bindemittel, c) 2,5-Furandicarbonsäure oder 2-Furancarbonsäure als Hydrophobierer, d) 2,3,4,5-Tetrahydroxyadipinsäure als Verflüssiger und e) Hydroxysilicate von ein-, zwei- und/oder dreiwertigen Metallen zu enthalten.

Der vorliegenden Erfindung lag die Aufgabe zugrunde, magnetische oder magnetisierbare Beschichtungsmassen verfügbar zu machen, die auch großtechnisch einfach und kostengünstig herstellbar sind und die insbesondere eine hohe Beladung mit magnetischem oder magnetisierbarem partikulären Material zulassen.

Demgemäß wurde eine magnetisierbare wässrige Spachtelmasse für die Herstellung magnetisierbarer Beschichtungen gefunden, enthaltend
a) 50,0 bis 90,89 Gew.-% an partikelförmigen magnetisierbaren Materialien,
b) 0,5 bis 12,5 Gew.-% an mindestens einem polymeren organischen Bindemittel (Feststoffanteil), insbesondere in Form einer wässrigen Polymerdispersion,
c) 0,05 bis 2,0 Gew.-% an mindestens einem Verdicker,
d) 0,05 bis 3,0 Gew.-% an mindestens einem Additiv,
e) 0,01 bis 1,5 Gew.-% an mindestens einem Netz- und/oder Dispergiermittel,
f) 8,0 bis 30,0 Gew.-% Wasser und
g) 0,5 bis 10,0 Gew.-% an mindestens einem Leichtfüllstoff sowie
h) 0 bis 2,5 Gew.-% an mindestens einem Fasermaterial und/oder
j) 0 bis 30,0 Gew.-% an mindestens einem Füllstoff und/oder mindestens einem Pigment,
wobei die die wässrige Spachtelmasse bildenden Komponenten sich zu 100,0 Gew.-% addieren.

In einer weiteren Ausführungsform enthält die erfindungsgemäße magnetisierbare wässrige Spachtelmasse
a) 41,0 bis 90,89 Gew.-% an partikelförmigen magnetisierbaren Materialien,
b) 0,5 bis 12,5 Gew.-% an mindestens einem polymeren organischen Bindemittel (Feststoffanteil), insbesondere in Form einer wässrigen Polymerdispersion,
c) 0,05 bis 2,0 Gew.-% an mindestens einem Verdicker,
d) 0,05 bis 3,0 Gew.-% an mindestens einem Additiv,
e) 0,01 bis 1,5 Gew.-% an mindestens einem Netz- und/oder Dispergiermittel,
f) 8,0 bis 30,0 Gew.-% Wasser und
g) 0,5 bis 10,0 Gew.-% an mindestens einem Leichtfüllstoff sowie
h) 0 bis 2,5 Gew.-% an mindestens einem Fasermaterial und/oder
j) 0 bis 30,0 Gew.-% an mindestens einem Füllstoff und/oder mindestens einem Pigment,
wobei die die wässrige Spachtelmasse bildenden Komponenten sich zu 100,0 Gew.-% addieren.

In einer anderen Ausführungsform enthält die erfindungsgemäße magnetisierbare wässrige Spachtelmasse
a) 50,0 bis 90,89 Gew.-% an partikelförmigen magnetisierbaren Materialien,
b) 0,5 bis 12,5 Gew.-% an mindestens einem polymeren organischen Bindemittel (Feststoffanteil), insbesondere in Form einer wässrigen Polymerdispersion,
c) 0,05 bis 2,0 Gew.-% an mindestens einem Verdicker,
d) 0,05 bis 3,0 Gew.-% an mindestens einem Additiv,
e) 0,01 bis 1,5 Gew.-% an mindestens einem Netz- und/oder Dispergiermittel,
f) 8,0 bis 21,0 Gew.-% Wasser und
g) 0,5 bis 10,0 Gew.-% an mindestens einem Leichtfüllstoff sowie
h) 0 bis 2,5 Gew.-% an mindestens einem Fasermaterial und/oder
j) 0 bis 30,0 Gew.-% an mindestens einem Füllstoff und/oder mindestens einem Pigment,
wobei die die wässrige Spachtelmasse bildenden Komponenten sich zu 100,0 Gew.-% addieren.

In einer bevorzugten Ausführungsform der erfindungsgemäßen wässrigen Spachtelmasse enthält diese
50 bis 80,0 Gew.-% oder 50 bis 88,0 Gew.-%, bevorzugt 55,0 bis 77,5 Gew.-%, besonders bevorzugt 57,5 bis 75,0 Gew.-%, an Komponente a),
0,75 bis 9,15 Gew.-%, bevorzugt 1,0 bis 8,0 Gew.-%, besonders bevorzugt 2,0 bis 7,0 Gew.-%, an Komponente b),
0,1 bis 1,6 Gew.-%, bevorzugt 0,15 bis 1,4 Gew.-%, besonders bevorzugt 0,2 bis 1,2 Gew.-%, an Komponente c),
0,1 bis 2,0 Gew.-%, bevorzugt 0,15 bis 1,75 Gew.-%, besonders bevorzugt 0,25 bis 1,5 Gew.- %, an Komponente d),
0,05 bis 1,25 Gew.-%, bevorzugt 0,075 bis 1,0 Gew.-%, besonders bevorzugt 0,1 bis 0,75 Gew.- %, an Komponente e),
10,0 bis 28,0 Gew.-%, bevorzugt 15,0 bis 27 Gew.-%, besonders bevorzugt 18 bis 26 Gew.-%, an Komponente f) und
1 bis 8 Gew.-%, bevorzugt 1,5 bis 7,5 Gew.-%, besonders bevorzugt 2,0 bis 6 Gew.-%, an Komponente g) sowie
0 bis 2,0 Gew.-%, bevorzugt 0,05 bis 1,5 Gew.-%, besonders bevorzugt 0,1 bis 1,0 Gew.-%, an Komponente h), und/oder
0 bis 25 Gew.-%, bevorzugt 1 bis 20 Gew.-%, besonders bevorzugt 2 bis 15 Gew.-%, an Komponente j),
wobei die die wässrige Spachtelmasse bildenden Komponenten sich zu 100,0 Gew.-% addieren.

In einer ebenfalls bevorzugten Ausführungsform der erfindungsgemäßen wässrigen Spachtelmasse enthält diese 56,55 bis 77,35 Gew.-% an Komponente a), 2,0 bis 7,0 Gew.-% an Komponente b), 0,2 bis 1,2 Gew.-% an Komponente c), 0,25 bis 1,5 Gew.-% an Komponente d), 0,1 bis 0,75 Gew.-% an Komponente e), 18 bis 26 Gew.-% an Komponente f) und 2,0 bis 6 Gew.-% an Komponente g) sowie 0,1 bis 1,0 Gew.-% an Komponente h) oder

57,5 bis 75,45 Gew.-%, an Komponente a) 2,0 bis 7,0 Gew.-% an Komponente b), 0,2 bis 1,2 Gew.-% an Komponente c), 0,25 bis 1,5 Gew.-% an Komponente d), 0,1 bis 0,75 Gew.-% an Komponente e), 18 bis 26 Gew.-% an Komponente f) und 2,0 bis 6 Gew.-% an Komponente g) sowie 2 bis 15 Gew.-%, an Komponente j) oder

57,5 bis 75,35 Gew.-% an Komponente a), 2,0 bis 7,0 Gew.-% an Komponente b), 0,2 bis 1,2 Gew.-% an Komponente c), 0,25 bis 1,5 Gew.-% an Komponente d), 0,1 bis 0,75 Gew.-% an Komponente e), 18 bis 26 Gew.-% an Komponente f) und 2,0 bis 6 Gew.-% an Komponente g) sowie 0,1 bis 1,0 Gew.-% an Komponente h) und 2 bis 15 Gew.-% an Komponente j),
wobei die die wässrige Spachtelmasse bildenden Komponenten sich jeweils zu 100,0 Gew.- % addieren.

Mit den erfindungsgemäßen wässrigen Spachtelmassen kann ein Gesamtfeststoffanteil größer oder gleich 65 Gew.-%, bevorzugt größer oder gleich 67,5 Gew.-% und besonders bevorzugt größer oder gleich 70 Gew.-% eingestellt werden.

Die der Erfindung zugrunde liegende Aufgabe wird auch gelöst durch eine magnetisierbare Beschichtung für ein Substrat, erhalten oder erhältlich aus der erfindungsgemäßen Spachtelmasse. In einer besonders bevorzugten Ausführungsform verfügen diese Beschichtungen über eine durchschnittliche, insbesondere absolute, Schichtdicke im Bereich von 0,5 bis 20,0 mm oder von 0,5 bis 10,0 mm, bevorzugt im Bereich von 1,5 bis 7,5 mm und besonders bevorzugt im Bereich von 1,5 bis 5,0 mm. Alternativ können auch Schichtdicken im Bereich von 3 bis 30,0 mm sowie bevorzugt im Bereich von 5 bis 20 mm oder im Bereich von 7,5 bis 15 mm zum Einsatz kommen. Es wurde überraschend gefunden, dass die erfindungsgemäßen Beschichtungen keinen oder nur einen sehr geringen Schrumpf aufweisen.

Diese Beschichtungen verfügen erfindungsgemäss über eine Buchholzhärte, bestimmt gemäß DIN EN ISO 2815:2003-10, im Bereich von 1,9 bis 3,0, bevorzugt im Bereich von 2,0 bis 2,5 und/oder, insbesondere und, eine Shore-Härte D gemäß DIN 53505:2000-08 im Bereich von 35 bis 65, bevorzugt im Bereich von 40 bis 60. Es hat sich überraschend gezeigt, dass diese erfindungsgemäßen Beschichtungen trotz des hohen Anteils an magnetisierbaren Partikeln wie Magnetit hinreichend weich und nachgiebig sind, so dass nadelförmige Objekte hineingedrückt werden können, und zwar vorzugsweise ohne dass hierbei Beschichtungsmaterial absplittert oder abbröckelt.

Ferner verfügen die erfindungsgemäßen Beschichtungen vorzugsweise über eine Pigmentvolumenkonzentration größer oder gleich 60 %, bevorzugt größer oder gleich 70 % und besonders bevorzugt größer oder gleich 80 %. Für die Bestimmung der Pigmentvolumenkonzentration kann beispielsweise Rückgriff genommen werden auf die Fachpublikation von A. Goldschmidt und H.-J. Streitberger im BASF Handbuch Lackiertechnik (2002; Vincentz Verlag).

Die erfindungsgemäßen magnetisierbaren Spachtelmassen eignen sich insbesondere auch für die Anbringung auf einer Substratoberfläche, insbesondere auf der Oberfläche einer Gebäudekomponente, z.B. auf einer Gebäudeinnenwand oder einer Gebäudedecke im Innenbereich. Besonders zweckmäßig können die erfindungsgemäßen magnetisierbaren Spachtelmassen auch bei der Herstellung von Fertighäusern oder von Komponenten hiervon eingesetzt werden.

Eine Trockenpräparation für die erfindungsgemäße magnetisierbare Spachtelmasse für die Herstellung magnetisierbarer Beschichtungen kann enthalten
a) 40 bis 94 Gew.-% an mindestens einem partikelförmigen magnetisierbaren Material,
b) 0,5 bis 15,0 Gew.-% an mindestens einem polymeren organischen Bindemittel (Feststoffanteil),
c) 0,0 bis 5,0 Gew.-% an mindestens einem Verdicker,
d) 0,05 bis 2,5 Gew.-% an mindestens einem Additiv,
i) 5 bis 40 Gew.-% an mindestens einem Zement,
j) 0,1 bis 15 Gew.-% an mindestens einem Füllstoff und/oder mindestens einem Pigment,
l) 0,25 bis 15,0 Gew.-% an mindestens einem Alkali- und/oder Erdalkalihydroxid und
g) 0,1 bis 15 Gew.-% an mindestens einem Leichtfüllstoff sowie
e) 0 bis 1,5 Gew.-% an mindestens einem Netz- und/oder Dispergiermittel und/oder
h) 0 bis 2,5 Gew.-% an mindestens einem Fasermaterial,
   wobei die die Trockenpräparation bildenden Komponenten sich zu 100,0 Gew.-% addieren.

In einer bevorzugten Ausführungsform enhält die Trockenpräparation
a) 50 bis 85 Gew.-%, bevorzugt 60 bis 75 Gew.-%, an dem mindestens einen partikelförmigen magnetisierbaren Material,
b) 1,0 bis 8,0 Gew.-%, bevorzugt 1,5 bis 6,0 Gew.-%, an dem mindestens einen polymeren organischen Bindemittel (Feststoffanteil),
c) 0,3 bis 4,0 Gew.-%, bevorzugt 0,5 bis 3,0 Gew.-%, an dem mindestens einen Verdicker,
d) 0,09 bis 2,0 Gew.-%, bevorzugt 0,25 bis 1,5 Gew.-%, an dem mindestens einen Additiv,
g) 0,5 bis 10 Gew.-%, bevorzugt 1,0 bis 5,0 Gew.-%, an dem mindestens einen Leichtfüllstoff,
h) 0,01 bis 2,0 Gew.-%, bevorzugt 0,02 bis 1,0 Gew.-%, an dem mindestens einen Fasermaterial,
i) 10,4 bis 35 Gew.-%, bevorzugt 15 bis 30 Gew.-%, an dem mindestens einen Zement,
j) 1 bis 5 Gew.-%, bevorzugt 1,5 bis 4,0 Gew.-%, an dem mindestens einen Füllstoff und/oder dem mindestens einen Pigment und
l) 1,0 bis 5,0 Gew.-%, bevorzugt 1,5 bis 3,0 Gew.-%, an dem mindestens einen Alkali- und/oder Erdalkalihydroxid sowie
e) 0 bis 1,0 Gew.-%, bevorzugt 0,1 bis 0,5 Gew.-%, an dem mindestens einen Netz- und/oder Dispergiermittel,
wobei die die Trockenpräparation bildenden Komponenten sich zu 100,0 Gew.-% addieren.

In einer besonders bevorzugten Ausführungsform enthält die Trockenpräparation
a) 46 bis 76 Gew.-% oder vorzugsweise 55 bis 76 Gew.-% Magnetit,
b) 1,5 bis 4,0 Gew.-% an dem mindestens einen polymeren organischen Bindemittel (Feststoffanteil), enthaltend oder bestehend aus einem Copolymer auf Basis von Vinylacetat und Ethylen,
c) 0,5 bis 3,0 Gew.-% an dem mindestens einen Verdicker, enthaltend oder bestehend aus einem Polyvinylalkohol-Verdicker,
d) 0,09 bis 2,0 Gew.-% an dem mindestens einen Additiv, enthaltend ein saures pH-Einstellmittel und mindestens ein Hydrophobierungsmittel,
g) 0,5 bis 5 Gew.-% an dem mindestens einen Leichtfüllstoff,
h) 0,01 bis 2,0 Gew.-% an dem mindestens einen Fasermaterial, enthaltend oder bestehend aus einer Schnittfaser, insbesondere einer Glasschnittfaser,
i) 18,5 bis 30 Gew.-% an dem mindestens einen Zement,
j) 1,5 bis 4,0 Gew.-% an dem mindestens einen Füllstoff, enthaltend oder bestehend aus gefälltem Calciumcarbonat, und
l) 1,4 bis 3,0 Gew.-% an Calciumhydroxid sowie
e) 0 bis 1,0 Gew.-% an dem mindestens einen Netz- und/oder Dispergiermittel,
wobei die die Trockenpräparation bildenden Komponenten sich zu 100,0 Gew.-% addieren.

In einer bevorzugten Ausführungsform der Trockenpräparation stellt Calciumhydroxid das bevorzugte Erdalkalihydroxid dar.

In einer weiteren bevorzugten Ausführungsform der Trockenpräparation stellt der Füllstoff gefälltes Calciumcarbonat dar.

Die Trockenpräparationen sind insbesondere geeignet für die Herstellung magnetisierbarer Beschichtungsmassen für magnetisierbare Beschichtungen, insbesondere für die Anbringung auf Substratoberflächen, besonders bevorzugt auf der Oberfläche einer Gebäudekomponente, z.B. auf einer Gebäudeinnenwand oder einer Gebäudedecke im Innenbereich. Die Trockenpräparationen eignen sich insbesondere auch für den Einsatz bei der Herstellung von Fertighäusern bzw. von Komponenten hiervon.

In besonders bevorzugten Ausführungsformen der erfindungsgemäßen wässrigen Spachtelmassen und der Trockenpräparationen verfügen diese über mindestens einen Leichtfüllstoff und gleichzeitig keine calcitischen Füllstoffe sowie bevorzugt mindestens einen Leichtfüllstoff sowie keine calcitischen Füllstoffe und keine silikatischen Füllstoffe.

Leichtfüllstoffe im Sinne der vorliegenden Erfindung unterscheiden sich von Füllstoffen im Sinne der Erfindung, dadurch, dass Letztere über eine Schüttdichte größer 600 g/l verfügen und dass erstere eine Schüttdichte kleiner oder gleich 600 g/l, insbesondere kleiner oder gleich 500 g/l, sowie besonders bevorzugt im Bereich von 50 bis 500 g/l, aufweisen. Die Schüttdichte von Leichtfüllstoffen kann gemäß dem Fachbuch "Füllstoffe", 2. Aufl., (dort Seiten 75 und 76) von Detlef Gysau mit Hilfe der Norm ISO 697 ermittelt werden. Die Schüttdichte berechnet sich dabei regelmäßig aus dem Quotienten aus der Masse und dem eingenommenen Volumen, das Zwischenräume und mögliche Hohlräume durch Poren einschließt. Indem man zusätzlich die genannten Leichtfüllstoffe in die erfindungsgemäße Beschichtungsmasse einarbeitet, wird diese beim Aufrühren nochmals voluminöser. Unter den Leichtfüllstoffen können sowohl organische Leichtfüllstoffe als auch anorganische Leichtfüllstoffe oder deren Mischungen verwendet werden. Geeignete Leichtfüllstoffe können dabei ausgewählt werden aus der Gruppe bestehend aus Glasbubbles, Blähglas, z.B. Blähglasgranulat, geblähten vulkanischen Gesteinen, insbesondere Perlite; expandierten Perliten; Blähton; Blähschiefer; Glasbeton; Schaumglas; porösem Vulkangestein, insbesondere Bims; Flugasche; Kesselsand; geblähtem Vermiculit; silikatischen Mikrohohlkugeln, insbesondere Alumosilikathohlkugeln; Aluminiumsilikaten, insbesondere expandierten Aluminiumsilikaten und/oder amorphen Aluminiumsilikaten; Calciumsilikathydraten; Schichtsilikaten; Korkpartikeln, polymeren Hohlkörpern und beliebigen Mischungen der genannten Leichtfüllstoffe. Unter den organischen Leichtfüllstoffen sind polymere Hohlkörper besonders bevorzugt. Mit den erfindungsgemäßen Spachtelmassen und den Trockenpräparationen kommen bevorzugt anorganische Leichtfüllstoffe zum Einsatz.

Die erfindungsgemäße Spachtelmasse zeichnet sich in besonders zweckmäßigen Ausführungsformen durch eine Viskosität aus, jeweils bestimmt bei einer Temperatur von 23 ± 0,20 °C und einer Scherrate von 100 s-1 mit dem Messbecher Z2 DIN mit einem Durchmesser von 45 mm und dem Messzylinder Z3 DIN mit einem Durchmesser von 25 mm, im Bereich von 1000 bis 5000 mPas, vorzugsweise im Bereich von 1500 bis 3000 mPas.

Das Viskositäts- bzw. Rheologie-Verhalten der erfindungsgemäßen Spachtelmasse kann in einer geeigneten Ausgestaltung mittels eines Rotationsrheometers bestimmt werden. Die Viskositäten η der erfindungsgemäßen Spachtelmasse sind dabei gemäß DIN 53019 (Ausgabe 05/1980) zu ermitteln. Diese Viskositäten η lassen sich z.B. mit dem Rotationsrheometer Physika Rheolab MC 1 der Firma Anton Paar unter Verwendung der Software US200/32 V2.50 bestimmen. Um vergleichbare Ergebnisse zu erhalten, sollten die Messungen bei konstanter Raumtemperatur, beispielsweise bei 23 +/- 0,20 °C vorgenommen werden. Im Allgemeinen reicht es aus, eine Rotationsrampe von 0,01 bis 100 1/s im Zeitraum von 100 s zu fahren. Hierbei wird die Messung derart vorgenommen, dass zunächst für 600 s das Messsystem temperiert wird, anschließend über 100 s die Rotationsgeschwindigkeit von 0,01 auf 100 1/s gesteigert, sodann für 150 s bei der Rotationsgeschwindigkeit von 100 1/s gehalten abschließend für weitere 100 s die Rotationsgeschwindigkeit von 100 auf 0,01 l/s zurückgefahren wird. Die Viskosität η der erfindungsgemäßen Beschichtungsmasse wird dabei aus dem zweiten Segment (konstante Umdrehungszahl) bei 100 1/s in der Weise ermittelt, dass der Mittelwert genommen wird aus dem Messpunkt bei Erreichen der Scherrate von 100 s-1 und dem Messpunkt bei Verlassen der Scherrate von 100 s-1. Form und Material bzw. die Messgeometrie der Messapparatur bzw. des Rotors basieren zweckmäßigerweise auf der Spezifikation Z2DIN.

Die partikelförmigen magnetisierbaren Materialien der erfindungsgemäßen Spachtelmassen und der Trockenpräparationen umfassen insbesondere ferri- und/oder ferromagnetische Materialien, insbesondere ferrimagnetische Materialien. Unter diesen partikelförmigen magnetisierbaren Materialien sind Ferrite, insbesondere Magnetit, Eisenpulver, insbesondere ferromagnetisches Eisenpulver und/oder kohlenstoffhaltiges Eisenpulver, und beliebigen Mischungen hiervon besonders bevorzugt. Unter den genannten partikelförmigen magnetisierbaren Materialien wird besonders bevorzugt auf Magnetit zurückgegriffen.

In den erfindungsgemäßen wässrigen Spachtelmassen setzt man in zweckmäßigerweise Additive ein, die ausgewählt sind aus der Gruppe bestehend aus Entschäumern, Konservierungsmitteln, Hydrophobierungsmitteln, Kieselsäure, pH-Einstellmitteln, Abbindeverzögerern und beliebigen Mischungen hiervon.

Unter den Verdickern für die erfindungsgemäßen Spachtelmassen und die Trockenpräparationen kann man dabei bevorzugt auf solche zurückgreifen, die ausgewählt sind aus der Gruppe bestehend aus Polyacrylat-Verdickern, Polyurethan-Verdickern, Polyharnstoff-Verdickern, Polyvinylalkohol-Verdickern, Polyetherpolyol-Verdickern, Stärkeether-Verdickern, Celluloseether-Verdickern, Polysaccharid-Verdickern, bevorzugt Xanthan, Fettalkoholethoxylat-Verdickern, organisch modifizierten Schichtsilikat-Verdickern und deren beliebigen Mischungen. Besonders bevorzugt wird unter den Verdickern auf Celluloseether-Verdicker, Polyvinylalkohol-Verdicker, Polyurethan-Verdicker und/oder, insbesondere und, organisch modifizierte Schichtsilikat-Verdicker zurück. Hierbei stellt der organisch modifizierte Schichtsilikat-Verdicker bevorzugt einen Bentonit-basierten Schichtsilikat-Verdicker dar.

In den erfindungsgemäßen wässrigen Spachtelmassen und in den Trockenpräparationen kommen in bevorzugten Ausführungsformen solche organischen Bindemittel zum Einsatz, die ausgewählt sind aus Homo- und/oder Copolymeren enthaltend Acrylate, Methacrylate, Vinylacetat und/oder Styrol. Hierbei sind Copolymere auf Basis von Vinylacetat und Ethylen oder Copolymere auf Basis von Styrol und Acrylaten und besonders bevorzugt ein Copolymer auf Basis von Vinylacetat und Ethylen besonders bevorzugt.

Geeignete Fasermaterialien umfassen Glasfasern und/oder Kohlenstofffasern. Diese Fasermaterialien werden bevorzugt in Form von Schnittfasern eingesetzt.

Unter den geeigneten Netz- und/oder Dispergiermitteln kann bevorzugt auf Tetrakaliumdiphosphat, Natriumpolyphosphat, Natriumpolyacrylat, Salze von Polyacrylsäuren, insbesondere Ammoniumsalze und/oder Natriumsalze von Polyacrylsäuren, zurückgegriffen werden. Auch können beliebige Mischungen dieser Netz- und/oder Dispergiermitteln eingesetzt werden.

Solche partikelförmigen magnetisierbaren Materialien haben sich als besonders geeignet für die Lösung der der Erfindung zugrunde liegenden Aufgabe erwiesen, die über eine durchschnittliche Partikelgröße D50 im Bereich von 10 bis 100 µm, bevorzugt im Bereich von 20 bis 30 µm, verfügen.

Die durchschnittliche Partikelgröße D50 kann gemäß DIN ISO 9276-1:2004-09 (Darstellung der Ergebnisse von Partikelgrößenanalysen - Teil 1: grafische Darstellung) und ISO 9276-2:2014-05 (Darstellung der Ergebnisse von Partikelgrößenanalysen - Teil 2: Berechnung von mittleren Partikelgrößen/-durchmessern und Momenten aus Partikelgrößenverteilungen) ermittelt werden. Für die Bestimmung der D50-Werte kann dabei auf sogenannte Laser Scattering Particle Size Distribution Analyser, wie von der Firma Horiba unter der Gerätebezeichnung "LA 950 V2" erhältlich, zurückgegriffen werden.

Mit der vorliegenden Erfindung geht die überraschende Erkenntnis einher, dass sich magnetisierbare Beschichtungen erhalten lassen, die hinreichend stark magnetisierbar sind, so dass sich zahlreiche magnetische Gebrauchsgegenstände unabhängig von Größe und/oder Gewicht an den Beschichtungen reversibel anbringen lassen. Ferner lag der vorliegenden Erfindung die überraschende Erkenntnis zugrunde, dass sich mit den erfindungsgemäßen Spachtelmassen magnetisierbare Beschichtungen, beispielsweise mit einer Dicke im Bereich von 5 bis 20 mm, erhalten lassen, die trotz des hohen Anteils an partikelförmigen magnetisierbaren Materialien wie Magnetit noch stets hinreichend weich und nachgiebig sind, so dass nadelförmige Objekte hineingedrückt werden können und an diesen nadelförmigen Objekten befestigte Vorrichtungen Halt finden.

## Patentansprüche

1. Magnetisierbare wässrige Spachtelmasse für die Herstellung magnetisierbarer Beschichtungen, enthaltend
a) 50 bis 90,89 Gew.-% an partikelförmigen magnetisierbaren Materialien,
b) 0,5 bis 12,5 Gew.-% an mindestens einem polymeren organischen Bindemittel (Feststoffanteil), insbesondere in Form einer wässrigen Polymerdispersion,
c) 0,05 bis 2,0 Gew.-% an mindestens einem Verdicker,
d) 0,05 bis 3,0 Gew.-% an mindestens einem Additiv,
e) 0,01 bis 1,5 Gew.-% an mindestens einem Netz- und/oder Dispergiermittel,
f) 8,0 bis 30,0 Gew.-% Wasser und
g) 0,5 bis 10 Gew.-% an mindestens einem Leichtfüllstoff sowie
h) 0 bis 2,5 Gew.-% an mindestens einem Fasermaterial und/oder
j) 0 bis 30 Gew.-% an mindestens einem Füllstoff und/oder mindestens einem Pigment,
wobei die die wässrige Spachtelmasse bildenden Komponenten sich zu 100,0 Gew.- % addieren.

2. Wässrige Spachtelmasse nach Anspruch 1, **gekennzeichnet durch**
50 bis 80,0 Gew.-%, bevorzugt 55,0 bis 77,5 Gew.-%, besonders bevorzugt 57,5 bis 75,0 Gew.-%, an Komponente a),
0,75 bis 9,15 Gew.-%, bevorzugt 1,0 bis 8,0 Gew.-%, besonders bevorzugt 2,0 bis 7,0 Gew.-%, an Komponente b),
0,1 bis 1,6 Gew.-%, bevorzugt 0,15 bis 1,4 Gew.-%, besonders bevorzugt 0,2 bis 1,2 Gew.-%, an Komponente c),
0,1 bis 2,0 Gew.-%, bevorzugt 0,15 bis 1,75 Gew.-%, besonders bevorzugt 0,25 bis 1,5 Gew.-%, an Komponente d),
0,05 bis 1,25 Gew.-%, bevorzugt 0,075 bis 1,0 Gew.-%, besonders bevorzugt 0,1 bis 0,75 Gew.-%, an Komponente e),
10,0 bis 28,0 Gew.-%, bevorzugt 15,0 bis 27 Gew.-%, besonders bevorzugt 18 bis 26 Gew.-%, an Komponente f) und
1 bis 8 Gew.-%, bevorzugt 1,5 bis 7,5 Gew.-%, besonders bevorzugt 2,0 bis 6 Gew.-%, an Komponente g) sowie
0 bis 2,0 Gew.-%, bevorzugt 0,05 bis 1,5 Gew.-%, besonders bevorzugt 0,1 bis 1,0 Gew.-%, an Komponente h), und/oder
0 bis 25 Gew.-%, bevorzugt 1 bis 20 Gew.-%, besonders bevorzugt 2 bis 15 Gew.-%, an Komponente j),
wobei die die wässrige Spachtelmasse bildenden Komponenten sich zu 100,0 Gew.- % addieren.

3. Wässrige Spachtelmasse nach Anspruch 1 oder 2 , **dadurch gekennzeichnet, dass** die partikelförmigen magnetisierbaren Materialien ferri- und/oder ferromagnetische Materialien, insbesondere ferrimagnetische Materialien, umfassen.

4. Wässrige Spachtelmasse nach einem der vorangehenden Ansprüche, **dadurch gekennzeichnet, dass**
die partikelförmigen magnetisierbaren Materialien Ferrite, insbesondere Magnetit, Eisenpulver, insbesondere ferromagnetisches Eisenpulver und/oder
kohlenstoffhaltiges Eisenpulver, und beliebigen Mischungen hiervon umfassen, insbesondere Magnetit.

5. Wässrige Spachtelmasse nach einem der vorangehenden Ansprüche, **dadurch gekennzeichnet, dass**
die Additive ausgewählt sind aus der Gruppe bestehend aus Entschäumern, Konservierungsmitteln, Hydrophobierungsmitteln, Kieselsäure, pH-Einstellmitteln, Abbindeverzögerern und beliebigen Mischungen hiervon und/oder dass
der Verdicker ausgewählt ist aus der Gruppe bestehend aus Polyacrylat-Verdickern, Polyurethan-Verdickern, Polyharnstoff-Verdickern, Polyvinylalkohol-Verdickern, Polyetherpolyol-Verdickern, Stärkeether-Verdickern, Celluloseether-Verdickern, Polysaccharid-Verdickern, bevorzugt Xanthan, Fettalkoholethoxylat-Verdickern, organisch modifizierten Schichtsilikat-Verdickern und deren beliebigen Mischungen, und bevorzugt Celluloseether-Verdicker, Polyvinylalkohol-Verdicker, Polyurethan-Verdickern und/oder, insbesondere und, organisch modifizierte Schichtsilikat-Verdicker umfasst oder darstellt und/oder dass
das mindestens eine organische Bindemittel auf Homo- und/oder Copolymeren enthaltend Acrylate, Methacrylate, Vinylacetat und/oder Styrol basiert, wobei das Copolymer bevorzugt ein Copolymer auf Basis von Vinylacetat und Ethylen oder ein Copolymer auf Basis von Styrol und Acrylaten und besonders bevorzugt ein Copolymer auf Basis von Vinylacetat und Ethylen oder ein Copolymer auf Basis Styrol und Acrylaten darstellt und/oder dass
das Netz- und/oder Dispergiermittel Tetrakaliumdiphosphat, Natriumpolyphosphat, Natriumpolyacrylat, Salze von Polyacrylsäuren, insbesondere Ammoniumsalze und/oder Natriumsalze von Polyacrylsäuren, oder deren beliebige Mischungen umfasst oder hieraus besteht.

6. Wässrige Spachtelmasse nach einem der vorangehenden Ansprüche, **dadurch gekennzeichnet, dass**
die partikelförmigen magnetisierbaren Materialien über eine durchschnittliche Partikelgröße im Bereich von 10 bis 100 µm, bevorzugt im Bereich von 20 bis 30 µm, verfügen.

7. Wässrige Spachtelmasse nach einem der vorangehenden Ansprüche, **dadurch gekennzeichnet, dass**
die Spachtelmasse über eine Viskosität, jeweils bestimmt bei einer Temperatur von 23 ± 0,20 °C und einer Scherrate von 100 s-1 mit dem Messbecher Z2 mit einem Durchmesser von 45 mm und dem Messzylinder Z3 mit einem Durchmesser von 25 mm, im Bereich von 1000 bis 5000 mPas, vorzugsweise im Bereich von 1500 bis 3000 mPas, verfügt.

8. Wässrige Spachtelmasse nach einem der vorangehenden Ansprüche, **dadurch gekennzeichnet, dass**
diese mindestens einen Leichtfüllstoff und keine calcitischen Füllstoffe und bevorzugt mindestens einen Leichtfüllstoff sowie keine calcitischen Füllstoffe und keine silikatischen Füllstoffe enthalten.

9. Magnetisierbare Beschichtung für ein Substrat, erhalten oder erhältlich aus der Spachtelmasse nach einem der vorangehenden Ansprüche, insbesondere **gekennzeichnet durch**
eine Buchholzhärte, bestimmt gemäß DIN EN ISO 2815:2003-10, im Bereich von 1,9 bis 3,0, bevorzugt im Bereich von 2,0 bis 2,5, und/oder, insbesondere und, eine Shore-Härte D, bestimmt gemäß DIN 53505:2000-08, im Bereich von 35 bis 65, bevorzugt im Bereich von 40 bis 60.

10. Beschichtung nach Anspruch 9, **gekennzeichnet durch**
eine durchschnittliche, insbesondere absolute, Schichtdicke im Bereich von 0,5 bis 10,0 mm, bevorzugt im Bereich von 1,5 bis 7,5 mm und besonders bevorzugt im Bereich von 1,5 bis 5,0 mm.

11. Verwendung der magnetisierbaren Spachtelmasse nach einem der Ansprüche 1 bis 8 für die Anbringung auf einer Substratoberfläche, insbesondere auf der Oberfläche einer Gebäudekomponente, z.B. auf einer Gebäudeinnenwand oder einer Gebäudedecke im Innenbereich.

12. Verwendung nach Anspruch 11, **dadurch gekennzeichnet, dass**
die Substratoberfläche Bestandteil eines Fertighauses ist.

## Claims

1. Magnetizable aqueous filler composition for the production of magnetizable coatings, containing
a) 50 to 90.89% by weight of particulate magnetizable materials,
b) 0.5 to 12.5% by weight of at least one polymeric organic binder (solids fraction), in particular in the form of an aqueous polymer dispersion,
c) 0.05 to 2.0% by weight of at least one thickener,
d) 0.05 to 3.0% by weight of at least one additive,
e) 0.01 to 1.5% by weight of at least one wetting and/or dispersing agent,
f) 8.0 to 30.0% by weight of water and
g) 0.5 to 10% by weight of at least one lightweight extender and
h) 0 to 2.5% by weight of at least one fibre material and/or
j) 0 to 30% by weight of at least one extender and/or at least one pigment,
wherein the components forming the aqueous filler composition add up to 100.0% by weight.

2. Aqueous filler composition according to Claim 1, **characterized by**
50 to 80.0% by weight, preferably 55.0 to 77.5% by weight, particularly preferably 57.5 to 75.0% by weight, of component a),
0.75 to 9.15% by weight, preferably 1.0 to 8.0% by weight, particularly preferably 2.0 to 7.0% by weight, of component b),
0.1 to 1.6% by weight, preferably 0.15 to 1.4% by weight, particularly preferably 0.2 to 1.2% by weight, of component c),
0.1 to 2.0% by weight, preferably 0.15 to 1.75% by weight, particularly preferably 0.25 to 1.5% by weight, of component d),
0.05 to 1.25% by weight, preferably 0.075 to 1.0% by weight, particularly preferably 0.1 to 0.75% by weight, of component e),
10.0 to 28.0% by weight, preferably 15.0 to 27% by weight, particularly preferably 18 to 26% by weight, of component f) and
1 to 8% by weight, preferably 1.5 to 7.5% by weight, particularly preferably 2.0 to 6% by weight, of component g) and
0 to 2.0% by weight, preferably 0.05 to 1.5% by weight, particularly preferably 0.1 to 1.0% by weight, of component h), and/or
0 to 25% by weight, preferably 1 to 20% by weight, particularly preferably 2 to 15% by weight, of component j),
wherein the components forming the aqueous filler composition add up to 100.0% by weight.

3. Aqueous filler composition according to Claim 1 or 2, **characterized in that** the particulate magnetizable materials comprise ferrimagnetic and/or ferromagnetic materials, in particular ferrimagnetic materials.

4. Aqueous filler composition according to any of the preceding claims, **characterized in that**
the particulate magnetizable materials comprise ferrites, in particular magnetite, iron powder, in particular ferromagnetic iron powder and/or carbonaceous iron powder, and any desired mixtures thereof, in particular magnetite.

5. Aqueous filler composition according to any of the preceding claims, **characterized in that**
the additives are selected from the group consisting of defoamers, preservatives, hydrophobing agents, silica, pH adjusters, setting retarders and any desired mixtures thereof, and/or **in that**
the thickener is selected from the group consisting of polyacrylate thickeners, polyurethane thickeners, polyurea thickeners, polyvinyl alcohol thickeners, polyether polyol thickeners, starch ether thickeners, cellulose ether thickeners, polysaccharide thickeners, preferably xanthan gum, fatty alcohol ethoxylate thickeners, organically modified phyllosilicate thickeners and any desired mixtures thereof, and preferably comprises or constitutes cellulose ether thickeners, polyvinyl alcohol thickeners, polyurethane thickeners and/or, in particular and, organically modified phyllosilicate thickeners, and/or **in that**
the at least one organic binder is based on homo- and/or copolymers containing acrylates, methacrylates, vinyl acetate and/or styrene, wherein the copolymer preferably constitutes a copolymer based on vinyl acetate and ethylene or a copolymer based on styrene and acrylates and particularly preferably a copolymer based on vinyl acetate and ethylene or a copolymer based on styrene and acrylates, and/or **in that**
the wetting and/or dispersing agent comprises or consists of tetrapotassium diphosphate, sodium polyphosphate, sodium polyacrylate, salts of polyacrylic acids, in particular ammonium salts and/or sodium salts of polyacrylic acids, or any desired mixtures thereof.

6. Aqueous filler composition according to any of the preceding claims, **characterized in that**
the particulate magnetizable materials have an average particle size in the range from to to 100 µm, preferably in the range from 20 to 30 µm.

7. Aqueous filler composition according to any of the preceding claims, **characterized in that**
the filler composition has a viscosity, in each case determined at a temperature of 23 ± 0.20°C and a shear rate of 100 s-1 with the measuring beaker Z2 having a diameter of 45 mm and the measuring cylinder Z3 having a diameter of 25 mm, in the range from 1000 to 5000 mPas, preferably in the range from 1500 to 3000 mPas.

8. Aqueous filler composition according to any of the preceding claims, **characterized in that**
they contain at least one lightweight extender and no calcitic extenders and preferably at least one lightweight extender and no calcitic extenders and no silicatic extenders.

9. Magnetizable coating for a substrate, obtained or obtainable from the filler composition according to any of the preceding claims, **characterized in** particular by a Buchholz hardness, determined according to DIN EN ISO 2815:2003-10, in the range from 1.9 to 3.0, preferably in the range from 2.0 to 2.5, and/or, in particular and, a Shore hardness D, determined according to DIN 53505:2000-08, in the range from 35 to 65, preferably in the range from 40 to 60.

10. Coating according to Claim 9, **characterized by**
an average, in particular absolute, layer thickness in the range from 0.5 to 10.0 mm, preferably in the range from 1.5 to 7.5 mm and particularly preferably in the range from 1.5 to 5.0 mm.

11. Use of the magnetizable filler composition according to any of Claims 1 to 8 for application to a substrate surface, in particular to the surface of a building component, e.g. to a building inner wall or a building ceiling in the interior.

12. Use according to Claim 11, **characterized in that**
the substrate surface is part of a prefabricated house.

## Revendications

1. Enduit aqueux magnétisable pour la fabrication de revêtements magnétisables, contenant
a) 50 à 90,89% en poids de matériaux magnétisables sous forme de particules,
b) 0,5 à 12,5% en poids d'au moins un liant organique polymère (proportion de solides), en particulier sous forme d'une dispersion aqueuse de polymère,
c) 0,05 à 2,0% en poids d'au moins un épaississant,
d) 0,05 à 3,0% en poids d'au moins un additif,
e) 0,01 à 1,5% en poids d'au moins un agent mouillant et/ou dispersant,
f) 8,0 à 30,0% en poids d'eau et
g) 0,5 à 10% en poids d'au moins une charge légère ainsi que
h) 0 à 2,5% en poids d'au moins un matériau fibreux et/ou
j) 0 à 30% en poids d'au moins une charge et/ou d'au moins un pigment,
la somme des composants formant l'enduit aqueux étant de 100,0% en poids.

2. Enduit aqueux selon la revendication 1, **caractérisé par**
50 à 80,0% en poids, de préférence 55,0 à 77,5% en poids, de manière particulièrement préférée 57,5 à 75,0% en poids, de composant a),
0,75 à 9,15% en poids, de préférence 1,0 à 8,0% en poids, de manière particulièrement préférée 2,0 à 7,0% en poids, de composant b),
0,1 à 1,6% en poids, de préférence 0,15 à 1,4% en poids, de manière particulièrement préférée 0,2 à 1,2% en poids, de composant c),
0,1 à 2,0% en poids, de préférence 0,15 à 1,75% en poids, de manière particulièrement préférée 0,25 à 1,5% en poids, de composant d),
0,05 à 1,2-5% en poids, de préférence 0,075 à 1,0% en poids, de manière particulièrement préférée 0,1 à 0,75% en poids, de composant e),
10,0 à 28,0% en poids, de préférence 15,0 à 27% en poids, de manière particulièrement préférée 18 à 26% en poids, de composant f) et
1 à 8% en poids, de préférence 1,5 à 7,5% en poids, de manière particulièrement préférée 2,0 à 6% en poids, de composant g) ainsi que
0 à 2,0% en poids, de préférence 0,05 à 1,5% en poids, de manière particulièrement préférée 0,1 à 1,0% en poids, de composant h), et/ou
0 à 25% en poids, de préférence 1 à 20% en poids, de manière particulièrement préférée 2 à 15% en poids, de composant j),
la somme des composants formant l'enduit aqueux étant de 100,0% en poids.

3. Enduit aqueux selon la revendication 1 ou 2, **caractérisé en ce que** les matériaux magnétisables sous forme de particules comprennent des matériaux ferrimagnétiques et/ou ferromagnétiques, en particulier des matériaux ferrimagnétiques.

4. Enduit aqueux selon l'une quelconque des revendications précédentes, **caractérisé en ce que**
les matériaux magnétisables sous forme de particules comprennent des ferrites, en particulier de la magnétite, de la poudre de fer, en particulier de la poudre de fer ferromagnétique et/ou de la poudre de fer contenant du carbone, et des mélanges quelconques de ceux-ci, en particulier de la magnétite.

5. Enduit aqueux selon l'une quelconque des revendications précédentes, **caractérisé en ce que**
les additifs sont choisis dans le groupe constitué par les antimousses, les conservateurs, les agents d'hydrophobisation, la silice, les agents d'ajustement du pH, les retardateurs de prise et des mélanges quelconques de ceux-ci et/ou **en ce que** l'épaississant est choisi dans le groupe constitué par les épaississants à base de polyacrylate, les épaississants à base de polyuréthane, les épaississants à base de polyurée, les épaississants à base d'alcool polyvinylique, les épaississants à base de polyétherpolyol, les épaississants à base d'éther d'amidon, les épaississants à base d'éther de cellulose, les épaississants à base de polysaccharide, de préférence la gomme xanthane, les épaississants à base d'éthoxylate d'alcool gras, les épaississants à base de silicates lamellaire modifiés organiquement et des mélanges quelconques de ceux-ci, et de préférence les épaississants à base d'éther de cellulose, les épaississants à base d'alcool polyvinylique, les épaississants à base de polyuréthane et/ou, en particulier et, comprend ou représente les épaississants à base de silicates lamellaire modifiés organiquement et/ou **en ce que** l'au moins un liant organique est à base d'homopolymères et/ou de copolymères contenant des acrylates, des méthacrylates, de l'acétate de vinyle et/ou du styrène, le copolymère représentant de préférence un copolymère à base d'acétate de vinyle et d'éthylène ou un copolymère à base de styrène et d'acrylates et de manière particulièrement préférée un copolymère à base d'acétate de vinyle et d'éthylène ou un copolymère à base de styrène et d'acrylates et/ou **en ce que** l'agent mouillant et/ou dispersant comprend ou est constitué de diphosphate de tétrapotassium, de polyphosphate de sodium, de polyacrylate de sodium, de sels d'acides polyacryliques, en particulier de sels d'ammonium et/ou de sels de sodium d'acides polyacryliques, ou de mélanges quelconques de ceux-ci.

6. Enduit aqueux selon l'une quelconque des revendications précédentes, **caractérisé en ce que**
les matériaux magnétisables sous forme de particules disposent d'une taille de particule moyenne dans la plage de 10 à 100 µm, de préférence dans la plage de 20 à 30 µm.

7. Enduit aqueux selon l'une quelconque des revendications précédentes, **caractérisé en ce que**
l'enduit dispose d'une viscosité, à chaque fois déterminée à une température de 23 ± 0,20 °C et à une vitesse de cisaillement de 100 s-1 avec le godet de mesure Z2 avec un diamètre de 45 mm et le cylindre de mesure Z3 avec un diamètre de 25 mm, dans la plage de 1000 à 5000 mPas, de préférence dans la plage de 1500 à 3000 mPas.

8. Enduit aqueux selon l'une quelconque des revendications précédentes, **caractérisé en ce que**
ceux-ci contiennent au moins une charge légère et aucune charge calcitique et de préférence au moins une charge légère ainsi qu'aucune charge calcitique et aucune charge silicatique.

9. Revêtement magnétisable pour un substrat, obtenu ou pouvant être obtenu à partir de l'enduit selon l'une quelconque des revendications précédentes, caractérisé en particulier par
une dureté Buchholz, déterminée selon DIN EN ISO 2815:2003-10, dans la plage de 1,9 à 3,0, de préférence dans la plage de 2,0 à 2,5, et/ou, en particulier et, une dureté Shore D, déterminée selon DIN 53505:2000-08, dans la plage de 35 à 65, de préférence dans la plage de 40 à 60.

10. Revêtement selon la revendication 9, **caractérisé par**
une épaisseur de couche moyenne, en particulier absolue, dans la plage de 0,5 à 10,0 mm, de préférence dans la plage de 1,5 à 7,5 mm et de manière particulièrement préférée dans la plage de 1,5 à 5,0 mm.

11. Utilisation de l'enduit magnétisable selon l'une quelconque des revendications 1 à 8 pour l'application sur une surface de substrat, en particulier sur la surface d'un composant de bâtiment, par exemple sur une paroi intérieure de bâtiment ou un plafond de bâtiment dans la zone intérieure.

12. Utilisation selon la revendication 11, **caractérisée en ce que** la surface de substrat fait partie d'une maison préfabriquée.
